# EUROPEAN PATENT SPECIFICATION

(11) **EP 2 861 880 B1**
(45) Date of publication and mention of the grant of the patent: **01.01.2020**
(21) Application number: 13729395.7
(22) Date of filing: 18.06.2013
(51) Int. Cl.: F16C 32/04, F16C 37/00, H02K 5/128

(54) **ENCAPSULATED MAGNET ASSEMBLY, METHOD OF PURGING A GAP, ROTARY MACHINE AND OIL/GAS PLANT.**
EINGEKAPSELTE MAGNETANORDNUNG, VERFAHREN ZUR SPÜLUNG EINES SPALTES, ROTATIONSMASCHINE UND ÖL-/GASANLAGE.
ENSEMBLE AIMANT ENROBÉ, PROCÉDÉ DE PURGE D'UN ENTREFER, MACHINE TOURNANTE ET INSTALLATION PÉTROLIFÈRE/GAZIÈRE.

(30) Priority: 19.06.2012 IT CO20120033
(43) Date of publication of application: 22.04.2015
(73) Proprietor: Nuovo Pignone S.r.l., 50127 Florence (IT)
(72) Inventor: LOMBARDI, Luca, I-50127 Florence (IT)
(74) Representative: BRP Renaud & Partner mbB Rechtsanwälte Patentanwälte Steuerberater
(86) International application number: PCT/EP2013/062648
(87) International publication number: WO 2013/189941

(56) References cited:
- FR-A1- 2 910 196
- US-A- 5 105 114
- US-A- 5 698 917

## Description

### TECHNICAL FIELD

Embodiments of the subject matter disclosed herein generally relate to encapsulated magnet assemblies, methods of purging a gap between an encapsulation housing of a magnet assembly and a part of machine, rotary machines, and oil/gas plants.

A typical application of such magnet assemblies is for magnetically bearing parts of machines.

### BACKGROUND ART

US 2010/0295395 A1 discloses a stator comprising a yoke of laminated magnetic material that presents pole pieces having ends that are located a short distance from an annular armature disposed at the periphery of a rotor. Coils surround the pole pieces and a protective coating is overmolded on the pole pieces and the coils.

A magnetic bearing is a bearing which supports a load using magnetic levitation.

Magnetic bearings support machines without physical contact; for example, they can levitate a rotating shaft of a machine and permit relative motion with very low friction and no mechanical wear.

A magnetic bearing comprises a stator assembly and a rotor assembly separated by a gap, often an air gap and more in general a gas gap; the stator assembly usually comprises pole pieces and coils. Such bearings are known for example from US patent n° 5,095,237.

It is to be noted that the rotor assembly may be part of the rotary machine being, for example, a journal of a rotary shaft.

Magnetic bearings are in service in such industrial applications as electric power generation, petroleum refining, machine tool operation, and natural gas pipelines.

In certain industrial applications, magnetic bearings need to be encapsulated (a term commonly used in industry is "canned") as their components may get in contact with e.g. corrosive fluids, such as sour gasses; this means that the stator assembly of the magnetic bearing is usually arranged within a sealed housing. Such bearings are known for example from European patent applications n° EP1967286, EP1967287,

EP1967288 and EP1967289.

The gap commonly used in magnetic bearings is quite small, for example 0.5 mm.

Due to the relative motion between the rotor and the stator the fluid in the gap tends to absorb power from the prime mover of the rotor thus reducing the overall efficiency of the machine. The absorbed power is generally referred as "windage loss". The absorbed power is converted to heat which increases the temperature of the fluid and consequently of the surrounding surfaces of the rotor and of the stator.

Windage loss is linearly proportional to the density of the fluid, the axial length of the bearing, the gap between rotor and stator; Windage loss is also proportional to the fourth power of the radius of the rotor of the bearing and to the third power of the rotational speed; this means that windage loss increases with the size of the bearing and with the speed of the rotating machine. In "Oil & Gas" applications, windage losses can reach easily values of thousands of watt.

As magnetic bearings have operating temperature limits in order to guarantee reliability, availability, maintainability and safety margins to the rotary machine, windage loss and its effects need to be limited and kept under control.

In order to solve these problems, it has been proposed to establish a fluid flow in the gap.

Anyway, due to the small size of the gap, high pressure differences are required for moving the fluid and/or the fluid moves relatively slowly within the gap.

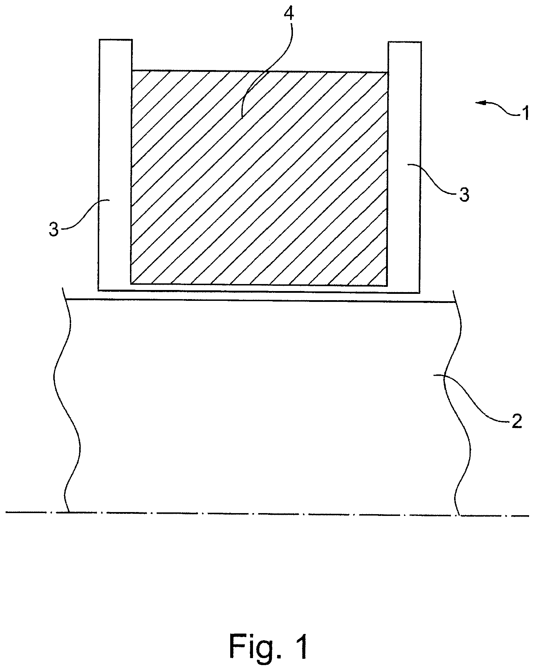

A solution for cooling a magnetic bearing based on the use of a specific air flow is described by US patent n° 7,315,101; it is to be noted that this magnetic bearing is not encapsulated. In order to obtain a magnetic bearing apparatus in which a large cooling effect is exerted by a simple configuration, fins which form an air flow in a rearward direction are disposed in a rear portion and outer diameter of a rotary shaft of a machine; there is a generator which converts the air flow produced by rotation of the fins to a compressed vortex flow; cooling wind is produced by the driving force of the rotary shaft; specific cooling wind flow paths, through which the cooling wind is to be passed and which elongate axially, are formed in the rotary shaft of the machine, more precise between the rotary shaft of the machine and a rotor assembly of the magnetic bearing (see e.g. FIG. 1), i.e. far from the gap.

It is to be noted that a magnetic bearing may be considered a particular embodiment of a magnet assembly. Encapsulated magnet assemblies are known for example from European patent applications n° EP2448088 and EP2450585.

### SUMMARY

Therefore, there is a need for a solution having improved performances in terms of purging of the gas in the gap as well as in terms of cooling of the magnet assemblies. This need is particularly felt for encapsulated magnetic bearings that have more design constraints than other magnet assemblies.

The present invention is defined in the accompanying claims.

A first aspect of the present invention is an encapsulated magnet assembly according to claim 1.

According to embodiments thereof, an encapsulated magnet assembly comprises at least one pole piece and an encapsulation housing; at least one portion of said encapsulation housing is adjacent to said at least one pole piece; at least one recess is provided in said encapsulation housing next to said at least one portion for establishing fluid flow, wherein said at least one recess is so shaped as to facilitate said fluid flow.

Such encapsulated magnet assemblies may find different applications: not only in magnetic bearings but also, for example, in rotors and/or stators of electric motors and electric generators for the "Oil & Gas" industry.

Some advantageous features and variants are set out in the following.

The encapsulated magnet assembly may comprise at least two pole pieces; in this case, at least two portions of said encapsulation housing are adjacent respectively to said at least two pole pieces, and a recess is provided in said encapsulation housing next to both of said at least two portions of said encapsulation housing.

Said recess may be elongated; in this case, said at least two portions of said encapsulation housing are on different sides with respect to said elongated recess.

The encapsulated magnet assembly may comprise a plurality of pole pieces; a plurality of portions of said encapsulation housing may be adjacent to said pole pieces.

The encapsulated magnet assembly may be configured to be associated or attached to another identical or similar encapsulated magnet assembly.

Said at least one pole piece may be part of or is attached to a permanent magnet.

Said at least one pole piece may be part of or is attached to an electromagnet.

The encapsulated magnet assembly may be configured as a rotating encapsulated magnet assembly.

The encapsulated magnet assembly may be configured as a non-rotating encapsulated magnet assembly.

The encapsulated magnet assembly may be a component of a stator-rotor assembly.

The encapsulated magnet assembly may be a component of an outside-in stator-rotor assembly, i.e. an assembly wherein the rotor being acted upon by the stator is disposed within a cavity defined at least in part by the stator.

The encapsulated magnet assembly may be a component of an inside-out stator-rotor assembly; i.e. an assembly wherein the stator acting upon the rotor is disposed within a cavity defined at least in part by the rotor.

The encapsulated magnet assembly may be a component of an axial stator-rotor assembly, i.e. an assembly wherein the encapsulated magnet assembly and its magnetic complement are arrayed in a non-parallel manner relative to the axis of the rotor, for example orthogonal to the axis of the rotor.

The encapsulated magnet assembly may be a component of an radial stator-rotor assembly i.e. an assembly wherein the encapsulated magnet assembly and its magnetic complement are arrayed in a parallel manner relative to the axis of the rotor.

A second aspect of the present invention (that may be considered an application of the first aspect) is an encapsulated magnetic bearing.

According to embodiments thereof, an encapsulated magnetic bearing comprises a plurality of pole pieces and an encapsulation housing; a plurality of portions of the encapsulation housing are adjacent to the pole pieces; at least one recess is provided in the encapsulation housing next to at least one of the portions for establishing fluid flow, wherein said at least one recess is so shaped as to facilitate said fluid flow.

Some advantageous features and variants are set out in the following.

Said fluid flow is typically a gas flow in a magnetic bearing especially for high rotation speeds.

Advantageously, a plurality of recesses are provided in said encapsulation housing next to said housing portions for establishing fluid flows.

The total area of said recesses is typically between about 0.3 and about 0.7 times the total area of said plurality of portions; in this way, a good support to the rotatable party is assured even there are the recesses; preferably, said recesses is about 0.5 times the total area of said plurality of housing portions.

Said plurality of pole pieces may be arranged in a circle.

Said plurality of pole pieces may extend radially.

Said encapsulation housing may comprise a cylindrical sleeve comprising said housing portions.

Said plurality of housing portions consist typically of between 8 and 32 housing portions; advantageously, said plurality of housing portions consist of between 16 and 24 housing portions; more advantageously, said plurality of housing portions consist of about 20 housing portions.

Said recesses is typically smaller than about 4.0 mm; advantageously, the depth of said recesses is between about 1.5 mm and about 3.5 mm; more advantageously, the depth of said recesses is about 2.5 mm.

Said encapsulation housing may comprise a metal sheet having a thickness between about 0.4 mm and about 1.0 mm; advantageously, said encapsulation housing comprises a metal sheet having a thickness about 0.5 mm.

Said recesses may consist of bended sheet metal; advantageously, said bended sheet metal has bend radius between about 0.5 mm and about 1.5 mm metal sheet.

The encapsulated magnetic bearing may comprise further coil supports; advantageously, said recesses are adjacent to said coil supports.

Advantageously, said recesses have a beveled inlet for facilitating said fluid flow into said recesses; said beveled inlet may consist of a rounding with a radius greater than or equal to approximately the product between 0.6 and the hydraulic diameter of said recesses.

Said encapsulation housing may comprise an input flange; in this case, said input flange may have the shape of an annulus, and said rounding may be located at the inner circle of said annulus.

Advantageously, said recesses may have a beveled outlet for facilitating said fluid flow out of said recesses; said beveled outlet may consist of a rounding with a radius greater than or equal to approximately the product between 0.6 and the hydraulic diameter of said recesses.

Said encapsulation housing may comprise an output flange; in this case, said output flange may have the shape of an annulus, and said rounding may be located at the inner circle of said annulus.

Said encapsulation housing is typically filled by resin.

Another aspect of the present invention is a method of purging a gap between an encapsulation housing of a magnet assembly and a part of a machine according to claim 11.

According to embodiments thereof, a method of purging a gap between an encapsulation housing of a magnet assembly and a part of a machine; the method comprises the steps of :
- providing at least one recess in the encapsulation housing adjacent to the gap,
- providing a pressure difference across the recess,
   and
- establishing a fluid flow in the recess;
the recess is so shaped as to facilitate fluid flow.

Said part may supported by said magnet assembly.

Said encapsulation housing of a magnet assembly may be an encapsulation housing of a magnetic bearing.

Said part and said housing may move with respect to each other, in particular said part may rotate with respect to said housing.

Some advantageous features and variants are set out in the following.

Typically, the method comprises the steps of :
- providing a plurality of recesses in said encapsulation housing adjacent to said gap, and
- establishing a fluid flow in each of said plurality of recesses.

Said gap is typically between about 0.2 mm and about 1.2 mm, more typically about 0.8 mm.

Said recesses is typically smaller than about 4.0 mm; advantageously, the depth of said recesses is between about 1.5 mm and about 3.5 mm; more advantageously, the depth of said recesses is about 2.5 mm.

Advantageously, said recesses extend axially.

Advantageously, said recesses extend axially from a first side of a magnetic bearing to a second side of a magnetic bearing. In this case, a pressure difference is established between the first side of said magnetic bearing and the second side of said magnetic bearing; said pressure difference may be in the range between 0.05 bar and 10.0 bar.

Advantageously, said recesses are straight.

Said recesses may be arranged symmetrically in a circle.

The method may comprise further the advantageous step of providing a beveled inlet for facilitating said fluid flow into said recesses.

The method may comprise further the step of providing a beveled outlet for facilitating said fluid flow out of said recesses.

The total area of said recesses is typically between about 0.3 and about 0.7 times the total area of said plurality of portions; in this way, a good support to the rotatable party is assured even there are the recesses; preferably, said recesses is about 0.5 times the total area of said plurality of housing portions.

The assembly and/or the bearing and/or the method set out above may advantageously be used for a rotary machine, i.e. a machine comprising a rotatable shaft supported by at least two bearing assemblies.

Typically, at least two bearings will be used.

The recesses should be at least one, but are advantageously more than one, for example a plurality.

The rotary machine may be a compressor or an expander.

The rotary machine may be an electric motor or an electric generator.

Thanks to encapsulated magnet assemblies or magnetic bearings according to the present invention, it is possible to provide an oil/gas plant with extremely high rotation speed rotary machines.

Thanks to encapsulated magnet assemblies or magnetic bearings according to the present invention, it is possible to provide an oil/gas plant with a highly efficient cooling system for the magnet assemblies or the encapsulated magnetic bearings of its rotary machines.

### BRIEF DESCRIPTION OF DRAWINGS

The accompanying drawings, which are incorporated herein and constitute a part of the specification, illustrate embodiments of the present invention and, together with the description, explain these embodiments. In the drawings:
Fig. 1 shows very schematically a first partial longitudinal cross-section of an embodiment of a magnetic bearing according to the present invention,
Fig. 2 shows very schematically a second partial longitudinal cross-section of an embodiment of a magnetic bearing according to the present invention,
Fig. 3 shows schematically and partially pole pieces of the embodiment of Fig. 1 and Fig. 2,
Fig. 4 shows schematically and partially pole pieces and coils of the embodiment of Fig. 1 and Fig. 2 together with a shaft journal,
Fig. 5 shows (transversal view) a first detail (labeled C in Fig. 4) of the embodiment of Fig. 1 and Fig. 2,
Fig. 6 shows (longitudinal view) a second detail (cross-section AA in Fig. 4) of the embodiment of Fig. 1 and Fig. 2,
Fig. 7 shows (longitudinal view) a third detail (cross-section BB in Fig. 4) of the embodiment of Fig. 1 and Fig. 2,
   and
Fig. 8 shows a conceptual flowchart of an embodiment of a method according to the present invention.

### DETAILED DESCRIPTION

The following description of the exemplary embodiments refers to magnetic bearings as shown in the accompanying drawings. The same reference numbers in different drawings identify the same or similar elements. The following detailed description does not limit the invention; instead, the scope of the invention is defined by the appended claims.

It is to be noted that in the accompanying drawings sometimes sizes have been exaggerated for the sake of clarity; in other words they are not perfectly in scale between each other.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

Fig. 1 shows a magnetic bearing 1 supporting a rotary shaft 2 (only the journal is shown) of a machine such as, for example, a compressor or an expander; typically, a rotary machine according to the present invention will comprise at least two identical or similar magnetic bearing as described and claimed in the following

This figure shows the magnetic bearing split into an encapsulation housing 3 and a part 4 encapsulated by the housing 3.

The housing 3 consists in a thin cylindrical sleeve portion and two thick annulus-shaped flanges joined to the sleeve portion at its opposite sides; between the sleeve portion and the shaft 2 there is a small gap, for example between about 0.2 mm and about 1.2 mm.

It is to be noted that Fig. 1 is a very schematically cross-section of an embodiment of a magnetic bearing according to the present invention only at specific positions.

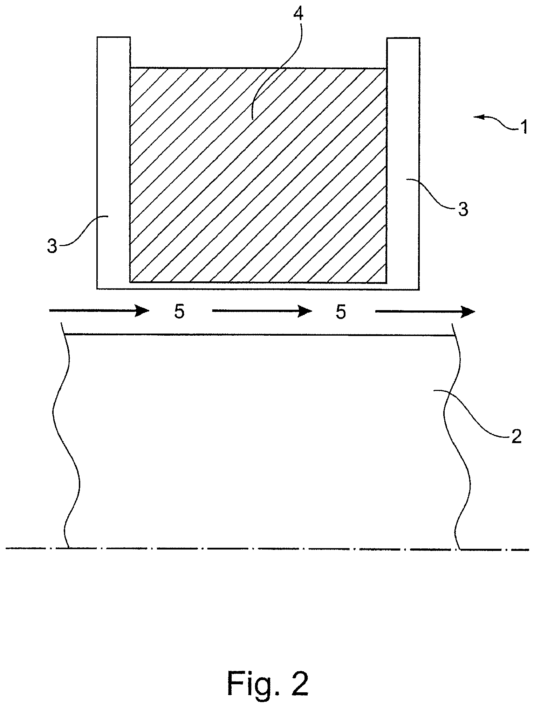

At other specific positions, a very schematic cross-section looks like the one shown in Fig. 2: instead of a small gap there is a passage 5 that corresponds to a recess in the encapsulation housing 3, more specifically a recess in the sleeve portion of the encapsulation housing 3; the depth of such a recess may be for example between 1.0 mm and 4.0 mm.

Thanks to the passage 5 a fluid may flow (see arrows in Fig. 2) rather easily from one side of the bearing 1 to the other side of the bearing 1 both when the shaft 3 is stationary and, more importantly, when the shaft 2 is rotating.

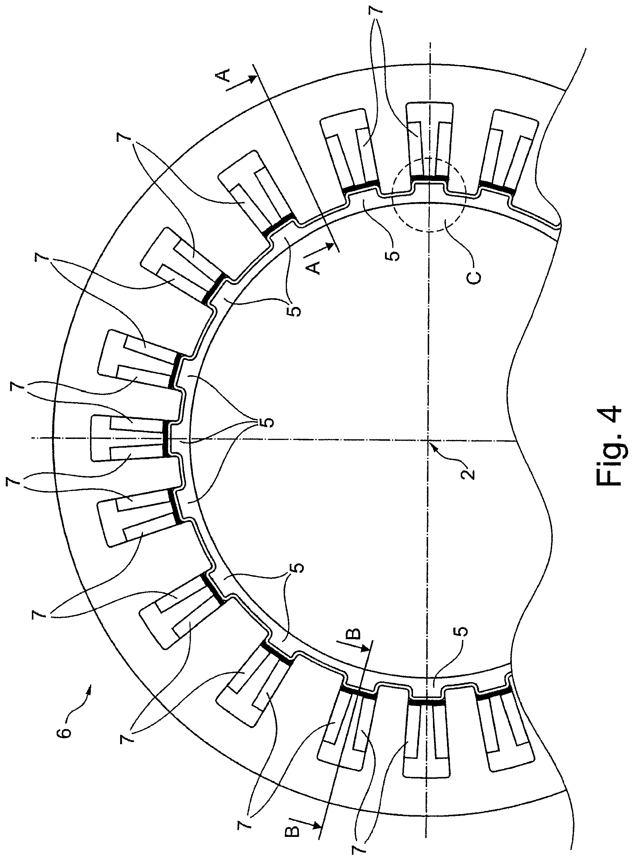

For a better understanding of Fig. 1 and Fig. 2, reference should be made to Fig. 4. Although Fig. 4 is less schematic than Fig. 1 and Fig. 2, Fig. 1 may be considered the view of cross-section AA and Fig. 2 may be considered the view of cross-section BB. From this figure it appears that there are a plurality of gaps and a plurality of passages (i.e. recesses), and that part 4 comprises at least a pole piece assembly 6 and coils 7; the pole piece assembly 6 comprises an assembly body and a plurality of pole pieces; the coils 7 are wound respectively around the pole pieces.

The same fluid is present on both sides of the bearing 1, in the gap and in the passages 5; during rotation of the shaft 2, the fluid flows not only along the passages 5 (i.e. axially) but also from the gaps to the adjacent passages 5 (i.e. tangentially) and from the passages 5 to the adjacent gaps (i.e. tangentially). Thanks to this design or a similar design, the heated fluid in the gaps can be very effectively removed from the bearing; additionally, new cold fluid can be fed to the bearing both (directly) in the gaps and in the passages; therefore a very effective cooling is achieved.

In order to circulate the fluid, a pressure difference is established between the two sides of the bearing 1, i.e. (relatively) high pressure on one side and (relatively) low pressure on the other side; the high pressure may be obtained by the use of a dedicated extraction duct from one of the stages of the compressor bundle or by the use of a dedicated compression stage for the cooling fluid; according to the second alternative, it is possible to generate the cooling fluid compression internally to the rotary machine or externally to the rotary machine (but associated thereto) through a dedicated compressor or fan.

The value of the pressure difference depends on several design parameters, but takes advantage from the presence of relatively wide passages and not only narrow gaps; in fact, due to the wide passages, the pressure drop is much less than in the solution according the prior art; this means that it is possible to use a lower pressure difference for circulating the fluid.

Regarding the substance or substances of the cooling fluid, there are some possibilities; generally, the most convenient solution is to use just the process gas; anyway, depending on the fluids already available in the plant where the compressor is located, it is possible to use a dedicated fluid, for example steam, air, nitrogen, ....

It is to be noted that the prior art solutions provided a uniform gap, as in Fig. 1, all over the perimeter of the encapsulation housing sleeve and no recesses, as those labeled 5 in Fig. 2 and in Fig. 4.

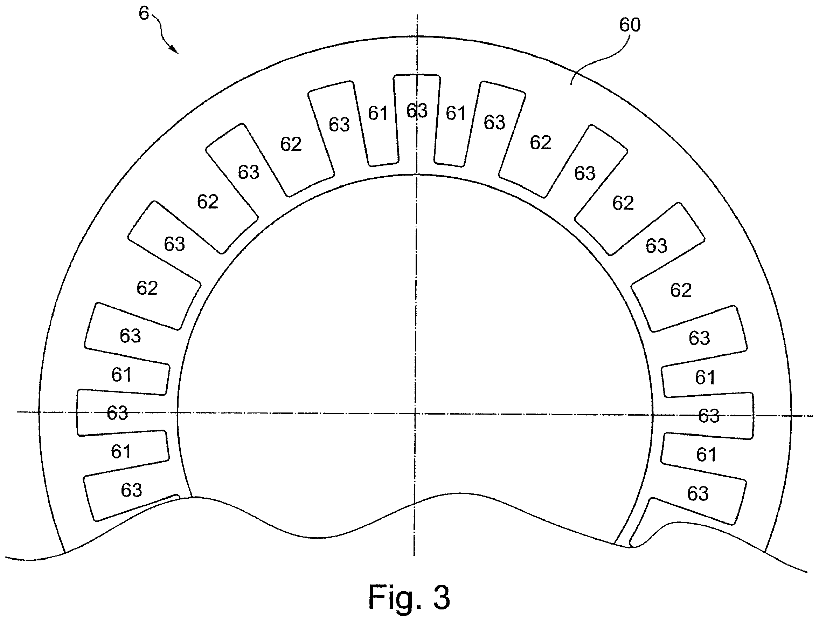

Fig. 3 shows the pole piece assembly 6 of the embodiment of Fig. 1 and Fig. 2.

The pole piece assembly 6 comprises an assembly body 60 and a plurality of pole pieces 61 and 62; the assembly body 60 has the shape of a toroid; the pole pieces 61 and 62 protrude from the assembly body 60 and extend radially towards the centre of the toroid; in this specific embodiment, some pole pieces 61 have a small size and some pieces 62 has a big size; in this specific embodiment all pole pieces 61 and 62 are separated by spaces 63, particularly of the same size, that receives the windings of the coils 7.

In Fig. 4, the coils 7 are shown as well as the recesses 5 in the encapsulation housing 3; each pole piece has its own winding wound around it.

From Fig. 4, it is apparent that, in the surface of the encapsulation housing 3 facing the journal 2 (that is substantially cylindrical), portions adjacent to the journal 2 (here there is only a small gap between the housing 3 and the shaft 2) are alternated with recesses 5.

In order to assure a good support to the shaft, the total area of the recesses should not be too large with respect to the total area adjacent to the journal (i.e. of the above mentioned portions). In this specific embodiment, there are twenty recesses 5 (and correspondingly twenty journal adjacent portions) each of them corresponding to an angular spread of about 6°, thus the overall spread of the recesses is about 120° while the overall spread of the journal adjacent portions is about 240°; this means that the total area of the recesses is about 0.5 times the total area of the journal adjacent portions; according to alternative embodiments, the total area of the recesses is between about 0.3 and about 0.7 times the total area of the journal adjacent portions.

The number of recesses varies from embodiment to embodiment; for example they may be in the range from eight to thirty-two, more specifically in the range from sixteen to twenty-four.

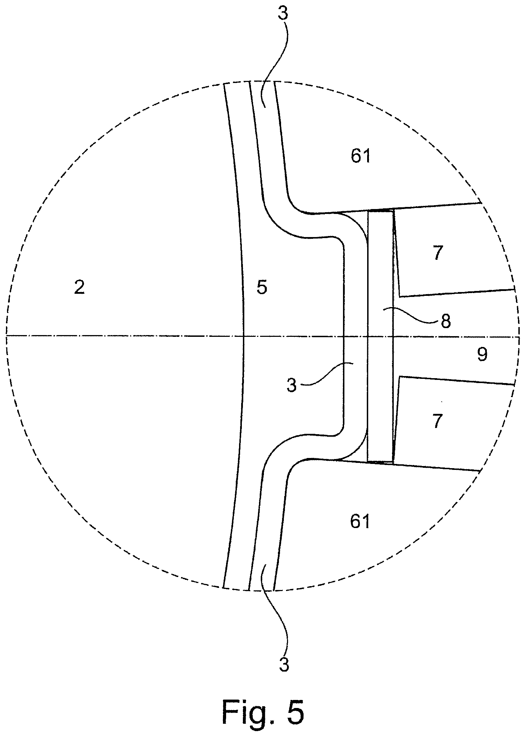

One of the recesses 5 and a neighboring zone is shown in detail in Fig. 5.

In addition to the elements already mentioned, Fig. 5 shows a "coil support" or "coil locker" 8 and a space filled with resin 9. The coil support 8 is a mechanical piece used for keeping two facing sides of two distinct coils 7 in position; in Fig. 4 coils supports are shown as black rectangles, but without any reference sign. The resin is used for filling empty spaces in order to guarantee a good electric isolation and a good mechanical strength.

Considering Fig. 5, the thickness of the sheet metal used for the encapsulation housing 3 is between about 0.4 mm and about 1.0 mm, specifically about 0.5 mm; the small gap between the journal 2 and the encapsulation housing 3 (upper part and lower part of Fig. 5) is between about 0.2 mm and about 1.2 mm, specifically about 0.8 mm; the depth of the recess 5 (with respect to the outer surface of the journal 2) is smaller than about 4.0 mm, specifically between about 1.5 mm and about 3.5 mm, more specifically about 2.5 mm; the bend radius of the sheet metal of the encapsulation housing 3 is between about 0.5 mm and about 1.5 mm.

The recess 5 is obtained by bending a sheet metal; in order to avoid unnecessary material stress, the bend radius (for example 1.0-1.5 mm) close to the journal 2 on both sides of the recess 5 is greater than the bend radius (for example 0.5-1.0 mm) far from the journal 2 on both sides of the recess 5.

The recess 5 is adjacent to the coil support 8; in this way, the mechanical action on the sheet metal 3 (which is quite thin) due to the fluid under pressure in the recess 5 is counterbalanced by the coil support 8.

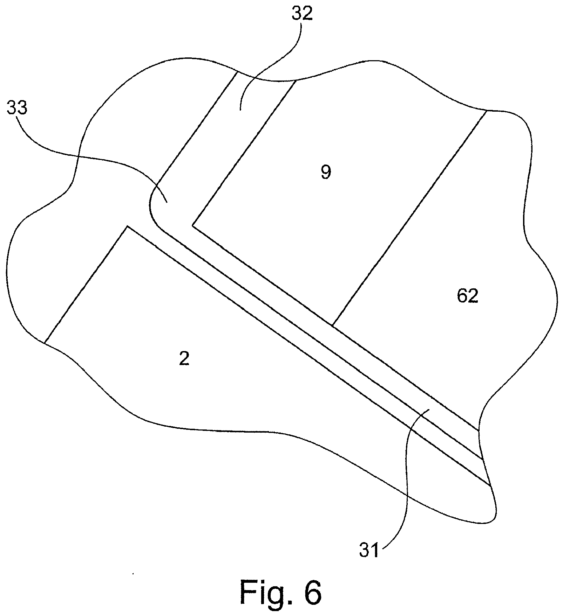

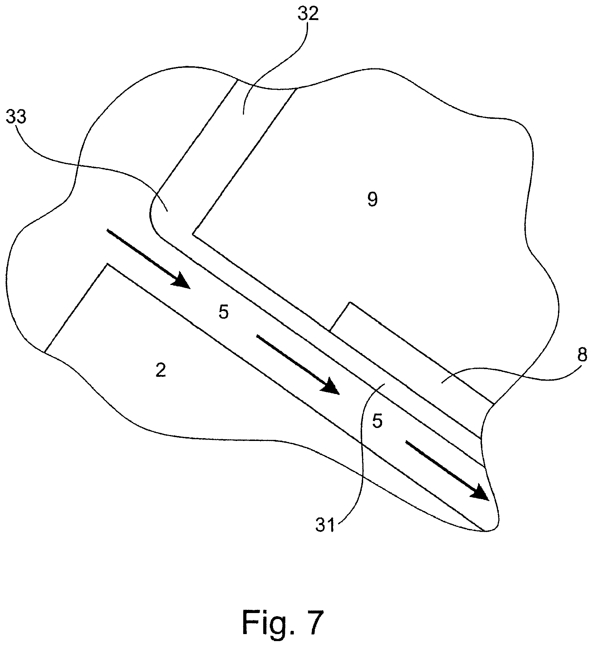

In the following, the recesses 5 will be described with regard to their longitudinal extension and therefore with reference in general to Fig. 1 and Fig. 2 and in detail to Fig. 6 and Fig. 7.

The recesses 5 are straight and they are arranged between the two opposite sides of the bearing 1.

Preferably, they have a beveled inlet for facilitating the fluid flow into the recesses 5, as shown in Fig. 7; additionally and preferably, they have also a beveled outlet for facilitating the fluid flow out of the recesses 5 (this is not shown in any figure).

The beveled inlet and outlet of a recess may consist of a rounding with a radius greater than or equal to approximately the product between 0.6 and the "hydraulic diameter" of the corresponding recess; the "hydraulic diameter" of a channel is the ratio between four times the area of the cross-section of the channel and the wetted perimeter of the cross-section of the channel. With reference to the specific embodiment of Fig. 5 and Fig. 6 and Fig. 7, the radius is about 1.8 mm.

In the embodiment of the figures, the encapsulation housing 3 comprises both an input flange (32 in Fig. 6 and Fig. 7) and an out put flange; both flanges flange have the shape of an annulus; these flanges are shown also in Fig. 1 and Fig. 2, but without any reference number. The thickness of the flanges 32 is much greater than the thickness of the sleeve portion 31 of the encapsulation housing; for example it can be from about 3 mm to about 7 mm. In this case, the rounding 33 is located at the inner circle of said annulus.

It appears from Fig. 6 and Fig. 7 that resin 9 is placed not only in the empty space between the coils 7 (as shown in Fig. 5) but also in other empty spaces so to avoid empty spaces in the encapsulated magnetic bearing.

One or more encapsulated magnetic bearings according to the present invention is particularly useful for those applications wherein the diameter of the journal is for example from 100 mm to 300 mm and its rotation speed is quite high for example from 8000 RPM to 12000 RPM; the present invention has been conceived especially for "Oil & Gas" applications.

The embodiments of encapsulated magnetic bearing just described implement methods of purging a gap between an encapsulation housing of a magnetic bearing and a part of e.g. a rotary machine wherein the part is rotatably supported by the magnetic bearing.

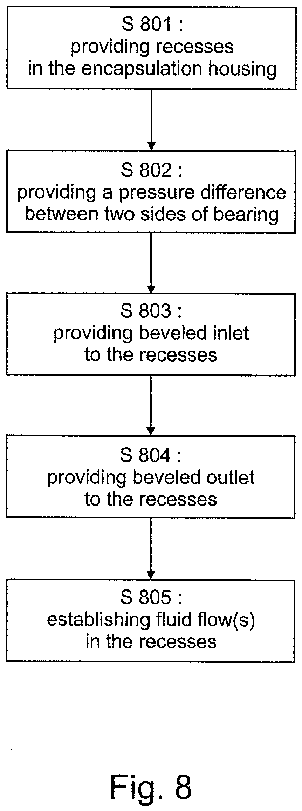

The flowchart of Fig. 8 corresponds to a specific embodiment of such a method.

The method of Fig. 8 comprises the steps of :
- providing recesses in the encapsulation housing (step 801) arranged between the two sides of the bearing and adjacent to the gap between the encapsulation housing and the journal,
- providing a beveled inlet to the recesses (step 802),
- providing a beveled outlet to the recesses (step 803),
- providing a pressure difference between the two sides of the bearing (step 804),
- establishing fluid flow(s) in the recesses (step 805).

Depending on the application the pressure difference may be for example from 0.05 bar to 10.0 bar.

Thanks to encapsulated magnetic bearings according to the present invention, it is possible to provide a plant for "Oil & Gas" applications (i.e. for treating oil and/or gas) with extremely high rotation speed rotary machines, i.e. electric motors and/or compressors and/or expanders; for example, the rotation speed may exceed 12000 RPM (mentioned before) and may reach 20000 RPM.

Thanks to encapsulated magnetic bearings according to the present invention, it is possible to provide a plant for "Oil & Gas" applications (i.e. for treating oil and/or gas) with a highly efficient cooling system for the encapsulated magnetic bearings of its rotary machines; in fact, less cooling fluid and/or lower pressure of the cooling fluid is necessary with respect to the prior art solutions.

## Claims

1. An encapsulated magnet assembly comprising at least one pole piece (61, 62) including coils (7) with resin (9) therebetween and an encapsulation housing (3), wherein at least one portion of said encapsulation housing (3) is adjacent to said at least one pole piece (61, 62) and wherein at least one recess (5) is provided in said encapsulation housing (3) next to said at least one portion for establishing fluid flow, wherein said at least one recess (5) has at least one of a beveled inlet and a beveled outlet for facilitating said fluid flow and comprising further coil supports (8), and wherein said recesses (5) are adjacent to said coil supports (8).

2. The encapsulated magnet assembly of claim 1, comprising at least two pole pieces (61, 62), wherein at least two portions of said encapsulation housing are adjacent respectively to said at least two pole pieces and wherein a recess is provided in said encapsulation housing next to both of said at least two portions of said encapsulation housing (3).

3. The encapsulated magnet assembly of claim 2, wherein said recess (5) is elongated, and wherein said at least two portions of said encapsulation housing are on different sides with respect to said elongated recess.

4. The encapsulated magnet assembly of any preceding claim, being an encapsulated magnet bearing and comprising a plurality of pole pieces (61, 62) and an encapsulation housing (3), wherein a plurality of portions of said encapsulation housing are adjacent to said pole pieces (61, 62) and wherein at least one recess is provided in said encapsulation housing next to at least one of said portions for establishing fluid flow.

5. The encapsulated magnet assembly of any preceding claim, wherein a plurality of recesses are provided in said encapsulation housing next to said housing portions for establishing fluid flows.

6. The encapsulated magnet assembly of any preceding claim, wherein the total area of said recesses is between about 0.3 and about 0.7 times the total area of said plurality of portions.

7. The encapsulated magnet assembly of any preceding claim, wherein said plurality of housing portions consist of between 8 and 32 housing portions.

8. The encapsulated magnet assembly of any preceding claim, wherein the depth of said recesses (5) is smaller than about 4.0 mm.

9. A rotary machine comprising an encapsulated magnet assembly according to any of claims from 1 to 8.

10. An oil/gas plant comprising a rotary machine according to claim 9.

11. A method of purging a gap between an encapsulation housing (3) of a magnet assembly according to any of claims 1 to 8, and a part of a machine, comprising the steps of :
providing one or more recesses (5) in said encapsulation housing adjacent to said gap,
providing a pressure difference across said one or more recesses (5), and
establishing a fluid flow in said one or more recesses (5);
wherein said one or more recesses have at least one of a beveled inlet and a beveled outlet for facilitating said fluid flow.

## Patentansprüche

1. Eingekapselte Magnetanordnung, umfassend mindestens einen Polschuh (61, 62) einschließlich Spulen (7) mit Harz (9) dazwischen und ein Einkapselungsgehäuse (3), wobei mindestens ein Abschnitt des Einkapselungsgehäuses (3) an den mindestens einen Polschuh (61, 62) angrenzt und wobei mindestens eine Aussparung (5) in dem Einkapselungsgehäuse (3) neben dem mindestens einen Abschnitt zur Erzeugung von Fluidströmung bereitgestellt ist, wobei die mindestens eine Aussparung (5) mindestens einen von einem abgeschrägten Einlass und einem abgeschrägten Auslass zur Erleichterung der Fluidströmung aufweist und weitere Spulenträger (8) umfasst und wobei die Aussparungen (5) an die Spulenträger (8) angrenzen.

2. Eingekapselte Magnetanordnung nach Anspruch 1, umfassend mindestens zwei Polschuhe (61, 62), wobei mindestens zwei Abschnitte des Einkapselungsgehäuses jeweils an die mindestens zwei Polschuhe angrenzen und wobei in dem Einkapselungsgehäuse neben den beiden mindestens zwei Abschnitten des Einkapselungsgehäuses (3) eine Aussparung bereitgestellt ist.

3. Eingekapselte Magnetanordnung nach Anspruch 2, wobei die Aussparung (5) gestreckt ist und wobei die mindestens zwei Abschnitte des Einkapselungsgehäuses sich auf verschiedenen Seiten in Bezug auf die gestreckte Aussparung befinden.

4. Eingekapselte Magnetanordnung nach einem vorstehenden Anspruch, bei der es sich um ein gekapseltes Magnetlager handelt und die eine Vielzahl von Polschuhen (61, 62) und ein Einkapselungsgehäuse (3) umfasst, wobei eine Vielzahl von Abschnitten des Einkapselungsgehäuses an die Polschuhe (61, 62) angrenzt und wobei mindestens eine Aussparung in dem Einkapselungsgehäuse neben mindestens einem der Abschnitte zur Erzeugung von Fluidströmung bereitgestellt ist.

5. Eingekapselte Magnetanordnung nach einem vorstehenden Anspruch, wobei eine Vielzahl von Aussparungen in dem Einkapselungsgehäuse neben den Gehäuseabschnitten zur Erzeugung von Fluidströmungen bereitgestellt ist.

6. Eingekapselte Magnetanordnung nach einem vorstehenden Anspruch, wobei die Gesamtfläche der Aussparungen zwischen dem etwa 0,3- und dem etwa 0,7-Fachen der Gesamtfläche der Vielzahl von Abschnitten beträgt.

7. Eingekapselte Magnetanordnung nach einem vorstehenden Anspruch, wobei die Vielzahl von Gehäuseabschnitten aus zwischen 8 und 32 Gehäuseabschnitten besteht.

8. Eingekapselte Magnetanordnung nach einem vorstehenden Anspruch, wobei die Tiefe der Aussparungen (5) weniger als etwa 4,0 mm beträgt.

9. Rotationsmaschine, umfassend eine eingekapselte Magnetanordnung nach einem der Ansprüche von 1 bis 8.

10. Öl-/Gasanlage, umfassend eine Rotationsmaschine nach Anspruch 9.

11. Verfahren zur Spülung eines Spaltes zwischen einem Einkapselungsgehäuse (3) einer Magnetanordnung nach einem der Ansprüche 1 bis 8 und einem Teil einer Maschine, umfassend die Schritte:
Bereitstellen einer oder mehrerer Aussparungen (5) in dem Einkapselungsgehäuse benachbart zu dem Spalt,
Bereitstellen einer Druckdifferenz über die eine oder die mehreren Aussparungen (5) und
Erzeugen einer Fluidströmung in der einen oder den mehreren Aussparungen (5);
wobei die eine oder die mehreren Aussparungen mindestens einen von einem abgeschrägten Einlass und einem abgeschrägten Auslass aufweisen, um die Fluidströmung zu erleichtern.

## Revendications

1. Ensemble aimant enrobé comprenant au moins une pièce polaire (61, 62) incluant des bobines (7) avec une résine (9) entre elles et un boîtier d'enrobage (3), dans lequel au moins une partie dudit boîtier d'enrobage (3) est adjacente à ladite au moins une pièce polaire (61, 62) et dans lequel au moins une cavité (5) est fournie dans ledit boîtier d'enrobage (3) à côté de ladite au moins une partie pour établir un écoulement de fluide, dans lequel ladite au moins une cavité (5) a au moins l'une d'une entrée biseautée et d'une sortie biseautée pour faciliter l'écoulement de fluide et comprenant d'autres supports de bobine (8), et dans lequel lesdites cavités (5) sont adjacentes auxdits supports de bobine (8).

2. Ensemble aimant enrobé selon la revendication 1, comprenant au moins deux pièces polaires (61, 62), dans lequel au moins deux parties dudit boîtier d'enrobage sont adjacentes respectivement auxdites au moins deux pièces polaires et dans lequel une cavité est fournie dans ledit boîtier d'enrobage à côté des deux desdites au moins deux parties dudit boîtier d'enrobage (3).

3. Ensemble aimant enrobé selon la revendication 2, dans lequel ladite cavité (5) est allongée, et dans lequel lesdites au moins deux parties dudit boîtier d'enrobage sont sur des côtés différents par rapport à ladite cavité allongée.

4. Ensemble aimant enrobé selon l'une quelconque des revendications précédentes, étant un palier magnétique enrobé et comprenant une pluralité de pièces polaires (61, 62) et un boîtier d'enrobage (3), dans lequel une pluralité de parties dudit boîtier d'enrobage sont adjacentes auxdites pièces polaires (61, 62) et dans lequel au moins une cavité est fournie dans ledit boîtier d'enrobage à côté d'au moins l'une desdites parties pour établir un écoulement de fluide.

5. Ensemble aimant enrobé selon l'une quelconque des revendications précédentes, dans lequel une pluralité de cavités sont fournies dans ledit boîtier d'enrobage à côté desdites parties de boîtier pour établir des écoulements de fluide.

6. Ensemble aimant enrobé selon l'une quelconque des revendications précédentes, dans lequel la surface totale desdites cavités est comprise entre environ 0,3 et environ 0,7 fois la surface totale de ladite pluralité de parties.

7. Ensemble aimant enrobé selon l'une quelconque des revendications précédentes, dans lequel ladite pluralité de parties de boîtier est constituée d'entre 8 et 32 parties de boîtier.

8. Ensemble aimant enrobé selon l'une quelconque des revendications précédentes, dans lequel la profondeur desdites cavités (5) est inférieure à environ 4,0 mm.

9. Machine tournante comprenant un ensemble aimant enrobé selon l'une quelconque des revendications 1 à 8.

10. Installation pétrolifère/gazière comprenant une machine tournante selon la revendication 9.

11. Procédé de purge d'un entrefer entre un boîtier d'enrobage (3) d'un ensemble aimant selon l'une quelconque des revendications 1 à 8, et une partie d'une machine, comprenant les étapes consistant à :
fournir une ou plusieurs cavités (5) dans ledit boîtier d'enrobage adjacent audit entrefer,
fournir une différence de pression à travers lesdites une ou plusieurs cavités (5), et
établir un écoulement de fluide dans lesdites une ou plusieurs cavités (5) ;
dans lequel lesdites une ou plusieurs cavités ont au moins l'une d'une entrée biseautée et d'une sortie biseautée pour faciliter ledit écoulement de fluide.
